# EUROPEAN PATENT APPLICATION

(11) **EP 3 306 710 A1**
(43) Date of publication of application: **11.04.2018**
(21) Application number: 17195177.5
(22) Date of filing: 06.10.2017
(51) Int. Cl.: H01M 4/133, H01M 4/587

(54) **NEGATIVE ELECTRODE FOR LITHIUM ION BATTERY AND METHOD FOR PREPARING THE SAME**

(30) Priority: 09.10.2016 CN 201610882892
(71) Applicant: Optimum Battery Co., Ltd., Shenzhen City, Guangdong 518118 (CN)
(72) Inventor: YANG, Guo long, Shenzhen, Guangdong 518118 (CN)
(74) Representative: Fry, Emma Leland

(57) **Abstract**

The present application provides a negative electrode for a lithium ion battery, including a negative electrode current collector and a negative electrode active material formed on the negative electrode current collector. The negative electrode active material includes a carbon nanoribbon, a conductive agent and a binder, and the mass ratio of the carbon nanoribbon, the conductive agent and the binder is (90-95): (0-5): (2-5). The present application also provides a method for preparing a negative electrode for a lithium ion battery, including the steps of: 1) fully mixing a carbon nanoribbon, a conductive agent and a binder at a mass ratio of (90-95): (0-5): (2-5) and obtaining a mixed slurry; and 2) coating the mixed slurry obtained in step 1) on a negative electrode current collector and obtaining a negative electrode for a lithium ion battery.

## Description

### BACKGROUND OF THE INVENTION

### FIELD OF THE INVENTION

The present application generally relates to lithium ion batteries and, more particularly, relates to a negative electrode for a lithium ion battery and a method for preparing the same.

### DESCRIPTION OF THE RELATED ART

With the rapid development of new energy vehicles, power batteries have become increasingly popular in people's daily life. Compared with lead-acid batteries, nickel-metal hydride batteries and nickel-cadmium batteries, lithium ion batteries have high working voltage, high energy density and long cycle life. Lithium ion batteries have a relatively high market share in the field of power batteries. Negative electrode material plays an important role in a lithium ion battery. Generally, the negative electrode material for a lithium ion battery should have a low oxidation-reduction potential in electrochemical reaction, small volume effect in the electrochemical reaction process, high specific capacity, high conductivity, high lithium ion transmission diffusion speed, and have the capability of forming a solid electrolyte interface film (SEI film) with an electrolyte.

At present, three types of negative electrode materials for a lithium ion battery in the market each has its own shortcomings. Graphite has low specific capacity, undesirable cycle life and high temperature performance, and poor compatibility with the solvent. The lattice volume expansion of alloy negative electrode material can even reach 360%. Lithium titanate material has a high voltage platform and insufficient power density and energy density.

In view of the foregoing, what is needed, therefore, is to provide a novel negative electrode for a lithium ion battery and a method for preparing the same, so as to overcome the defects as detailed above.

### SUMMARY OF THE INVENTION

One object of the present application is to provide a negative electrode for a lithium ion battery and a method for preparing the same. A lithium ion battery using the negative electrode for a lithium ion battery of the present application has small internal resistance, good rate performance, long cycle life and high energy density.

According to one embodiment of the present application, a negative electrode for a lithium ion battery including: a negative electrode current collector and a negative electrode active material formed on the negative electrode current collector, wherein the negative electrode active material includes a carbon nanoribbon, a conductive agent and a binder, and a mass ratio of the carbon nanoribbon, the conductive agent and the binder is (90-95): (0-5): (2-5).

According to one aspect of the present application, the carbon nanoribbon has a thickness of 2 to 30nm and a length of 1 to 15µm, and a ratio of the width to the thickness of the carbon nanoribbon is (10-15): 1.

According to one aspect of the present application, the binder is polyvinylidene fluoride or carboxymethylcellulose sodium or styrene-butadiene resin or acrylonitrile copolymer.

According to one aspect of the present application, the conductive agent is selected from a group consisting of acetylene black, superconductive carbon black, carbon fiber, superconductive graphite, carbon nanotube and graphene.

According to one aspect of the present application, the negative electrode current collector is made from copper foil.

Compared with the prior art, in the negative electrode for a lithium ion battery according to the present application, the carbon nanoribbon has good electrical conductivity, which can reduce the use of negative electrode conductive agent, increase the proportion of the negative electrode active material, increase the energy density of the battery. The lithium ion battery having the negative electrode for a lithium ion battery of the present application has small internal resistance, good rate performance and long cycle life.

One embodiment of the present application further provides a method for preparing a negative electrode for a lithium ion battery, including the steps of:
1) fully mixing a carbon nanoribbon, a conductive agent and a binder at a mass ratio of (90-95) : (0-5) : (2-5), and obtaining a mixed slurry; and
2) coating the mixed slurry obtained in step 1) on a negative electrode current collector, and obtaining a negative electrode for a lithium ion battery.

### BRIEF DESCRIPTION OF THE DRAWINGS

FIG. 1 depicts a SEM image of a carbon nanoribbon used in the present application;
FIG. 2 depicts normal distribution diagrams of capacity of a lithium ion batteries according to a first comparative example, a second comparative example and an example of the present application; and
FIG. 3 depicts 3C cycle diagrams of lithium ion batteries prepared according to a first comparative example, a second comparative example, and an example of the present application.

### DETAILED DESCRIPTION OF PREFERRED EMBODIMENTS

In order that the objects, technical solution and technical effects of the present invention can be more understood clearly, the present invention will be described in more detail with reference to the accompanying drawings and examples. It should be understood that the specific examples described herein are illustrative only and are not intended to limit the present invention.

One embodiment of the present application provides a negative electrode for a lithium ion battery including a negative electrode current collector and a negative electrode active material formed on the negative electrode current collector, wherein the negative electrode active material includes a carbon nanoribbon, a conductive agent and a binder, and a mass ratio of the carbon nanoribbon, the conductive agent and the binder is (90-95): (0-5): (2-5).

Specifically, the carbon nanoribbon has a thickness of 2-30nm and a length of 1-15µm. The ratio of the width to the thickness of the carbon nanoribbon is (10-15): 1.

Specifically, the binder is polyvinylidene fluoride (PVDF) or carboxymethylcellulose sodium (CMC) or styrene-butadiene resin (SBR) or acrylonitrile copolymer.

Specifically, the conductive agent is selected from a group consisting of acetylene black, superconductive carbon black, carbon fiber, superconductive graphite, carbon nanotube and graphene.

Specifically, the negative electrode current collector is made from copper foil.

In the negative electrode for a lithium ion battery according to the present application, the carbon nanoribbon has good electrical conductivity, which can reduce the use of negative electrode conductive agent, increase the proportion of the negative electrode active material, and improve the energy density of the battery. In addition, a lithium ion battery having the negative electrode for a lithium ion battery according to the present application has small internal resistance, desirable rate performance and long cycle life.

One embodiment of the present application provides a method for preparing a negative electrode for a lithium ion battery, including the steps of:
1) fully mixing a carbon nanoribbon, a conductive agent and a binder at a mass ratio of (90-95) : (0-5) : (2-5), and obtaining a mixed slurry; and
2) coating the mixed slurry obtained in step 1) on a negative electrode current collector and obtaining a negative electrode for a lithium ion battery.

Specifically, the carbon nanoribbon has a thickness of 2 to 30nm and a length of 1 to 15µm. The ratio of the width to the thickness of the carbon nanoribbon is (10-15): 1.

Specifically, the binder in step 1) is polyvinylidene fluoride (PVDF) or carboxymethylcellulose sodium (CMC) or styrene-butadiene resin (SBR) or acrylonitrile copolymer.

Specifically, the conductive agent in step 1) is selected from a group consisting of acetylene black, superconductive carbon black, carbon fiber, superconductive graphite, carbon nanotube and graphene.

Specifically, in step 1), the carbon nanoribbon, the conductive agent and the binder is fully mixed via high-speed mechanical stirring method, grinding method, ultrasonic dispersion method, or combination thereof.

Specifically, the negative electrode current collector in step 2) is made from copper foil.

### Comparative Example 1

1. Fully mixing an artificial graphite, a conductive agent and a binder at a mass ratio of 95: 2: 2.5 via high-speed mechanical stirring and obtaining a mixed slurry, in which, the binder is acrylonitrile copolymer, the conductive agent is superconductive carbon black SP;
2. coating the mixed slurry obtained in step 1) on a negative electrode current collector of copper foil and obtaining a negative electrode for a lithium ion battery;
3. cutting the negative electrode, winding the negative electrode and the positive electrode with a separator set between the negative electrode and the positive electrode, and obtaining a lithium ion battery having a conventional graphite negative electrode after injecting electrolyte and sealing.

### Comparative Example 2

1. Fully mixing a silicon carbon composite, a conductive agent and a binder at a mass ratio of 95: 2: 2.5 via high-speed mechanical stirring and obtaining a mixed slurry, wherein the mass ratio of silicon to carbon in the silicon carbon composite is 85:15, the binder is an acrylonitrile copolymer and the conductive agent is a superconductive carbon black SP;
2. coating the mixed slurry obtained in step 1) on a negative electrode current collector of copper foil and obtaining a negative electrode for a lithium ion battery;
3. cutting the negative electrode, winding the negative electrode and the positive electrode with a separator set between the negative electrode and the positive electrode, and obtaining a lithium ion battery having a conventional graphite negative electrode after injecting electrolyte and sealing.

### Example

1. Fully mixing a carbon nanoribbon, a conductive agent and a binder at a mass ratio of 95: 2: 2.5 via high-speed mechanical stirring and obtaining a mixed slurry, wherein the carbon nanoribbon has a thickness of 2 to 30nm and a length of 1 to15µm, the ratio of width to thickness of the carbon nanoribbon is (10-15): 1, the binder is an acrylonitrile copolymer, and the conductive agent is a superconductive carbon black SP;
2. coating the mixed slurry obtained in step 1) on a negative electrode current collector 10 of copper foil (as shown in FIG. 4) and obtaining a negative electrode for a lithium ion battery;
3. cutting the negative electrode, winding the negative electrode and the positive electrode with a separator set between the negative electrode and the positive electrode, and obtaining a lithium ion battery having a conventional graphite negative electrode after injecting electrolyte and sealing.

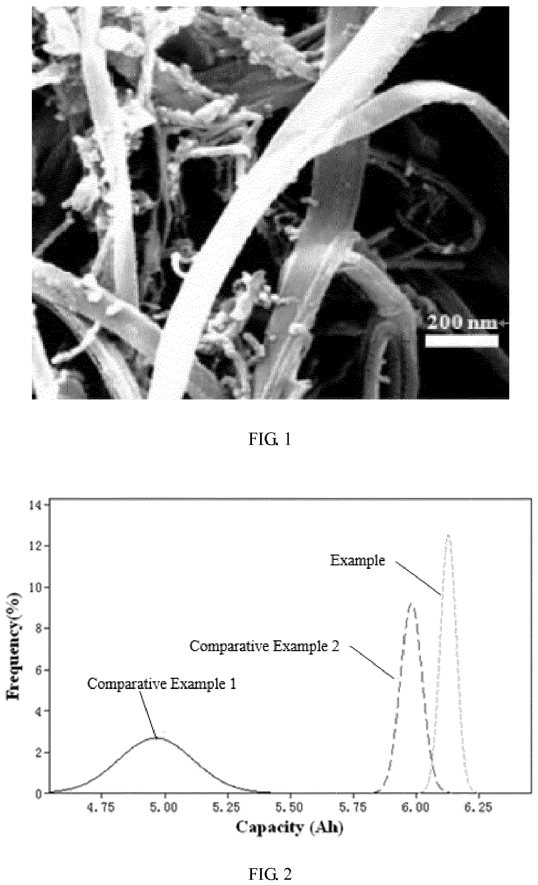

FIG. 1 depicts a SEM image of a carbon nanoribbon used in the present application. Firstly, the carbon nanoribbon has a graphitized structure of graphene, a small thickness and a large specific surface area. Due to electrons in the graphene nanoribbon having limited size are limited in the horizontal direction, the electrons are forced to move longitudinally, and the carbon nanoribbon has a property of a semiconductor. In addition, the carbon nanoribbon has the characteristic of flexibility in structure and, therefore, has a more flexible and adjustable properties than those of the graphene. Secondly, the carbon nanoribbon is different from the carbon nanotube. The carbon layer of the carbon nanoribbon is a completely open structure and has a larger specific surface area and more pore structure than those of the carbon nanotube, which not only provides more lithium ion storage sites, but provides more reaction interfaces for lithium ion, so that the lithium storage intercalation reaction is easier to be carried out. In addition, due to the large specific surface area and the flexibility of the interaction between the carbon nanoribbons, a trimensional pore structure is formed, which can facilitate the contact between the electrode active material and the electrolyte and shorten the transport diffusion paths of the lithium ions and the electrolyte, so as to improve the lithium-containing capacity and the rate performance of the negative electrode material of the lithium ion battery. Therefore, the carbon nanoribbon has the advantages of the carbon nanotube and the graphene. Compared with a conventional carbon-based negative electrode material, a silicon/tin alloy negative electrode material and a lithium titanate negative electrode material, the carbon nanoribbon has the advantages of good conductivity and lithium intercalation capability. As a negative electrode material of a lithium ion battery, the carbon nanoribbon has a better rate performance and cyclic performance, and has a higher specific capacity.

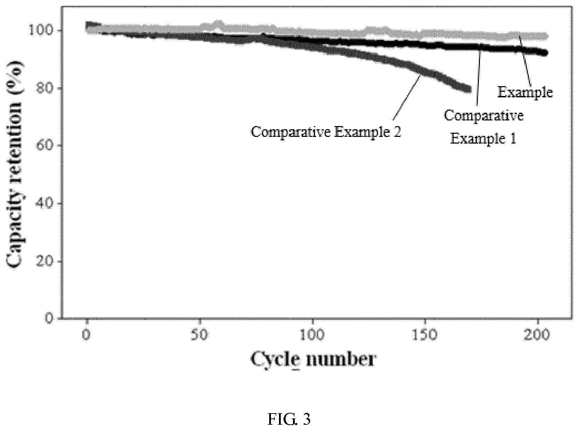

FIG. 2 depicts normal distribution diagrams of capacities of lithium ion batteries according to the first comparative example, the second comparative example and the example of the present application. FIG. 3 depicts 3C cycle diagrams of lithium ion batteries according to the first comparative example, the second comparative example and the example of the present application. Referring to FIGS. 2 and 3, the battery capacity and the 3C cycle performance of the lithium ion battery having the carbon nanoribbon negative electrode according to the example of the present application has better capacity and 3C cycle performance than those of the first comparative example and the second comparative example.

It should be understood that, the above examples are only used to illustrate the technical concept and feature of the present invention, and the purpose thereof is familiarize the person skilled in the art to understand the content of the present invention and carry it out, which cannot restrict the protection scope of the present invention based on above. Any equivalent transformation or modification made in the spirit of the present invention should all be included within the protection scope of the present invention.

## Claims

1. A negative electrode for a lithium ion battery, comprising:
a negative electrode current collector, and
a negative electrode active material formed on the negative electrode current collector,
wherein the negative electrode active material comprises a carbon nanoribbon, a conductive agent and a binder, and a mass ratio of the carbon nanoribbon, the conductive agent and the binder is (90-95):(0-5):(2-5).

2. The negative electrode for a lithium ion battery of claim 1, wherein the carbon nanoribbon has a thickness of 2 to 30nm and a length of 1 to 15µm, and a ratio of width to thickness of the carbon nanoribbon is (10-15): 1.

3. The negative electrode for a lithium ion battery of claim 2, wherein the binder is polyvinylidene fluoride or carboxymethylcellulose sodium or styrene-butadiene resin or acrylonitrile copolymer.

4. The negative electrode for a lithium ion battery of claim 3, wherein the conductive agent is selected from a group consisting of acetylene black, superconductive carbon black, carbon fiber, superconductive graphite, carbon nanotube and graphene.

5. The negative electrode for a lithium ion battery of claim 1, wherein the negative electrode current collector is made from copper foil.

6. A method for preparing a negative electrode for a lithium ion battery, comprising the steps of:
1) fully mixing a carbon nanoribbon, a conductive agent and a binder at a mass ratio of (90-95) : (0-5) : (2-5) and obtaining a mixed slurry; and
2) coating the mixed slurry obtained in step 1) on a negative electrode current collector and obtaining a negative electrode for a lithium ion battery.

7. The method of claim 6, wherein the carbon nanoribbon in step 1) has a thickness of 2 to 30nm and a length of 1 to15µm, and a ratio of width to thickness of the carbon nanoribbon is (10-15): 1.

8. The method of claim 7, wherein the binder in step 1) is polyvinylidene fluoride, or carboxymethylcellulose sodium or styrene-butadiene resin, or acrylonitrile copolymer.

9. The method of claim 8, wherein the conductive agent in step 1) is selected from a group consisting of acetylene black, superconductive carbon black, carbon fiber, superconductive graphite, carbon nanotube and graphene.

10. The method of claim 6, wherein the carbon nanoribbon, the conductive agent and the binder in step 1) is mixed via high-speed mechanical stirring method, grinding method, ultrasonic dispersion method or combination thereof; and the negative electrode current collector in step 2) is made from copper foil.
